# EUROPÄISCHE PATENTSCHRIFT

(11) **EP 2 337 814 B1**
(45) Veröffentlichungstag und Bekanntmachung des Hinweises auf die Patenterteilung: **15.03.2017**
(21) Anmeldenummer: 09778589.3
(22) Anmeldetag: 17.09.2009
(51) Int. Cl.: A01N 25/10, C05G 3/00, C08J 5/18, C08K 3/22, C08K 5/1545, D01F 1/10, C08L 101/16, C08L 1/12, C08L 1/14, D01F 2/28

(54) **BIOLOGISCH ABBAUBARER KUNSTSTOFF UND VERWENDUNG DESSELBEN**
BIODEGRADABLE PLASTIC AND USE THEREOF
MATIÈRE PLASTIQUE BIODÉGRADABLE ET SON UTILISATION

(30) Priorität: 14.10.2008 DE 102008051579
(43) Veröffentlichungstag der Anmeldung: 29.06.2011
(73) Patentinhaber: Rhodia Acetow GmbH, 79108 Freiburg (DE)
(72) Erfinder: RUSTEMEYER, Paul, 79194 Gundelfingen (DE); KOPPE, Wolfgang, 79249 Merzhausen (DE); HÖLTER, Dirk, 79312 Emmendingen (DE)
(74) Vertreter: Hagemann, Heinrich
(86) Internationale Anmeldenummer: PCT/EP2009/006734
(87) Internationale Veröffentlichungsnummer: WO 2010/043293

(56) Entgegenhaltungen:
- EP-A- 0 394 803
- WO-A-92/20738
- WO-A-94/10238
- US-A- 5 720 803
- US-A1- 2002 123 546

## Beschreibung

Die Erfindung betrifft einen biologisch abbaubaren Kunststoff erhöhter biologischer Abbaugeschwindigkeit und vorteilhafte Verwendungen desselben.

Der biologische Abbau von Kunststoffen ist in vielen Bereichen wünschenswert, so z.B. im Zusammenhang mit der Kompostierbarkeit von Kunststoffbeuteln für kompostierbaren Müll, für Kunststoffgegenstände, die achtlos in die Umwelt geworfen werden, wie z.B. Zigarettenkippen, die schnell biologisch abgebaut werden sollten, für Gegenstände, die sich aufgrund ihrer Zweckbestimmung in Erde zersetzen sollen, wie beispielsweise Blumentöpfe, die gemeinsam mit der Pflanze eingegraben werden können, oder für "*Slow-Release*-Systeme im landwirtschaftlichen Bereich, bei denen Wirkstoffe nach und nach durch den biologischen Verfall einer Polymermatrix die darin eingelagerten Wirkstoffe bzw. Biocide freigesetzt werden.

Die US-A-5,478,386 schlägt vor, den Abbau fortgeworfener Zigarettenkippen, bei denen das Filtermaterial auf Celluloseacetat beruht, dadurch zu beschleunigen, indem mindestens etwa 10 Gew.-% eines Celluloseacetats eines Substitutionsgrades von weniger als 2,5 herangezogen werden. Hiermit soll eine 4-Wochen-Abbaurate von mindestens 60 Gew.-% gemäß der Bestimmungsmethode TM125209-91 erzielt werden. Die EP 0 632 969 B1 macht zum Abbau von Filter Tow, bestehend aus Celluloseacetat, Filamenten und/oder Celluloseacetatspinnfasern, den Vorschlag, an der Oberfläche der Filamente bzw. Spinnfasern befindliches Celluloseacetat alkalisch zu hydrolysieren, um die Acetylzahl auf weniger als 53% einzustellen und um hiermit den biologischen Abbau zu fördern. Die Lehre der EP 0 632 968 B1 will den Abbau dadurch beschleunigen, indem Zusatzmittel aus Celluloseketten abspaltenden Enzymen einbezogen werden, um die Acetylzahl auf weniger als 53% zu senken. Die EP 0 777 977 A2 befasst sich mit abbaubaren Zigaretten, wobei eine gut abbaubare Polymermischung eingesetzt wird. Die EP 1 221 869 B1 schlägt die Einbeziehung von N-haltigen Verbindungen vor, die molekulardispers in dem abbaubaren Kunststoff verteilt sind. Einen weiteren Vorschlag zur Verbesserung der Abbaubarkeit von Kunststoffen macht die PCT/AT92/00126, wonach wasserlösliche oder wasserunlösliche Verbindungen zugesetzt werden, die schneller abbaubar sind. Die diesbezügliche Wirkung dieses Vorschlags wurde getestet. So wurden Cellulosediacetatfasern hergestellt, in denen Zucker oder Kochsalz, jeweils zu Teilchen kleiner als 2 µm gemahlen und in einem Anteil von 5 bis 10 Gew.-% eingesponnen wurden. Es wurde über das reine Herauslösen der wasserlöslichen Bestandteile hinaus im nachfolgend noch detaillierter angesprochenen Erdeingrabungstest kein signifikant beschleunigter Abbau festgestellt.

Der Erfindung lag daher die Aufgabe zugrunde, einen technischen Vorschlag zu unterbreiten, nach dem biologisch abbaubare Kunststoffe eine erhöhte biologische Abbaugeschwindigkeit aufweisen.

Erfindungsgemäß wird diese Aufgabe durch einen biologisch abbaubaren Kunststoff gelöst, der dadurch gekennzeichnet ist, dass der Kunststoff a) 0,1 bis 40 Gew.-% feinst verteilte Partikel einer biologisch abbaubaren, wasserlöslichen, organischen Komponente mit einer mittleren Teilchengröße von weniger als 10 µm und b) feinst verteilte Partikel einer wasserlöslichen, das Wachstum von Mikroorganischen fördernden, N-, P- und/oder S-enthaltenden anorganischen Komponente einer mittleren Teilchengröße von weniger als 10 µm enthält.

Es wurde überraschenderweise gefunden, dass ein beschleunigter biologischer Abbau bei einem biologisch abbaubaren Kunststoff stattfindet, wenn dieser a) feinst verteilte Partikel einer biologisch abbaubaren, wasserlöslichen, organischen Komponente, so beispielsweise einen Zucker, und darüber hinaus b) feinst verteilte Partikel einer wasserlöslichen, das Wachstum von die organischen Mikroorganismen fördernden, N-, P- und/oder S-enthaltenden anorganischen Komponente enthält, wenn diese beispielsweise in Cettuioseacetatfäden, die später zu einem Filter Tow verarbeitet werden, eingesponnen waren. Ausgehend von dieser Erkenntnis wurde die erfindungsgemäße Lehre weiterentwickelt. Bevorzugte Ausgestaltungen hiervon werden nachfolgend dargestellt:

Bei der Wahl des biologisch abbaubaren Kunststoffs unterliegt die Erfindung keinen wesentlichen Einschränkungen. Bevorzugt wird es, dass der biologisch abbaubare Kunststoff auf Celluloseester, insbesondere Celluloseacetat, Celluloseacetatpropionat und/oder Celluloseacetatbutyrat, Polylaktid, Polycaprolacton und/oder Polyhydroxybuttersäure, Poly(lactid-co-glycolid), Polylactid-polyglycol-Blockcopolymere , beruht. Daher kann auch der Einsatz von Mischungen vorteilhaft sein.

Auch bei der Komponente a) gibt es stofflich-qualitativ keine relevanten Einschränkungen. Bevorzugt sind wasserlösliche Saccharide und/oder wasserlösliche organische Säuren. Unter den wasserlöslichen Sacchariden sind Saccharose, Glukose, Maltose und/oder Laktose bevorzugt. Als bevorzugte wasserlösliche organische Säuren gelten Oxalsäure, Malonsäure, Glutarsäure, Adipinsäure, Hydrooxycarbonsäuren, insbesondere Milchsäure, Äpfelsäure, Weinsäure, Zitronensäure und/oder Ascorbinsäure und/oder Aminocarbonsäuren, als bevorzugt. Diese können also in Reinform oder in Mischung eingesetzt werden.

Zu der bevorzugten Komponente a) zählen auch wasserlösliche anorganische Stickstoffverbindungen und/oder wasserlösliche organische Phosphorverbindungen. Dabei gelten als wasserlösliche organische Stickstoffverbindungen Harnstoff, Guardinin, Hexamethylentetraamin, Glycin und/oder Alanin als bevorzugt.

Zu der bevorzugten qualitativen Bemessung der Komponente b) ist Folgendes auszuführen: Es ist bevorzugt, dass die Komponente b) in Form von Cl-, K-, Mg, Ca- und/oder Fe-haltigen Salzen vorliegt, wobei die Salze in Form von Na (NH₄)₂ PO₄, NaH₂PO₄, Na₂SO₄, (NH₄)₂SO₄, NH₄NO₃, NaNO₃, MgSO₄, KH₂PO₄, FeSO₄ und/oder NH₄Cl ganz besonders bevorzugt sind. In Frage kommen insbesondere wasserlösliche Salze der Phosphorsäure wie Ammoniumorthophosphat ((NH₄)₃PO4 · 3H₂O), Diammoniumhydrogenorthophosphat ((NH₄)₂HPO₄·3H₂O), Ammoniumdihydrogenorthophosphat ((NH₄) H₂PO₄·3H₂O), Natriumorthophos-phat (Na₃PO₄·12H₂O), Natriumorthophosphat (Na₃PO₄·10H₂O), Dinatriumhydrogenphosphat (Na₂HPO₄·2H₂O), Dinatriumhydrogenphosphat (Na₂HPO₄·12H₂O), Natriumhydrogenphosphat (NaH₂PO₄·2H₂O), Natriumpyrophosphat (Na₂H₂P₂O₇·6H₂O), Natriumammoniumhydrogen-phosphat (NaH(NH₄) PO₄·4H₂O), Kaliumtetrametaphosphat ((KPO₃)₄·2H₂O), Kaliumortho-phosphat (K₃PO₄), Kaliumdihydrogenphosphat KH₂PO₄, Kaliummonohydrogenphosophat (K₂HPO₄), Kaliumpyrophosphat (K₄P₂O₇·3H₂O) und Kaliumsubsphosphat (K₂PO₃·4H₂O). Diese Substanzen b) können in Reinform oder Mischung eingesetzt werden, dies insbesondere in kristalliner Form.

Der erfindungsgemäß angestrebte Effekt der erhöhten biologischen Abbaubarkeit wird nicht nur durch die oben angegebenen qualitativen Größen bestimmt. Vielmehr ist es wesentlich, dass die Komponente a) eine mittlere Teilchengröße von weniger als etwa 10 µm, insbesondere weniger als etwa 5 µm aufweist. Dabei ist eine mittlere Teilchengröße von weniger als 2 µm besonders bevorzugt, wobei eine Teilchengröße von weniger als 1 µm ganz besonders bevorzugt ist. Die Teilchengröße der Komponente b) beträgt weniger als 10 µm, insbesondere weniger als 5 µm. Noch bessere Ergebnisse werden erzielt, wenn die Komponente b) eine mittlere Teilchengröße von weniger als etwa 2 µm, insbesondere weniger als etwa 1 µm aufweist.

Um im Rahmen der erfindungsgemäßen Lehre die gestellte Aufgabe zu lösen, sind quantitative Rahmenbedingungen zu beachten: So ist die Komponente a) in dem biologisch abbaubaren Kunststoff in einer Menge von etwa 0,1 bis 40 Gew.-%, insbesondere etwa 1 bis 20 Gew.-%, enthalten, wobei der Bereich von etwa 5 bis 10 Gew.-% besonders bevorzugt ist. Die Komponente b) ist in dem biologisch abbaubaren Kunststoff vorzugsweise in einer Menge von etwa 0,01 bis 20 Gew.-%, insbesondere etwa 0,2 bis 10 Gew.-%, enthalten. Hier ist der besonders bevorzugte Bereich mit etwa 0,3 bis 3 Gew.-% anzugeben.

Die oben bezeichnete erfindungsgemäße Lehre ist auf einen biologisch abbaubaren Kunststoff erhöhter biologischer Abbaubarkeit in allgemeiner Darstellung beschrieben. In der Praxis liegt dieser biologisch abbaubare Kunststoff insbesondere als Formkörper vor. Hierbei kann es sich insbesondere handeln um Fasern, Folien, wie tiefgezogene Folien, insbesondere zur Anwendung als Verpackungsmaterialien, Spritzgussartikel, dickwandige Formkörper, Granulate, Mikrobeats, Perlen sowie Gefäße, insbesondere Blumentöpfen.

Ein besonders interessanter Anwendungsfall besteht darin, dass der Formkörper, beispielsweise als Granulat, Mikrobeat, Perlen vorliegend, freisetzbare Biocide bzw. Agrowirkstoff und/oder Düngemittel enthält. Zu den Agrowirkstoffen bzw. Biociden zählen z.B. Fungizide, Pestizide, Herbizide, Bakterizide und/oder Insektizide. Als Düngemittel können angegeben werden Nährstoffdünger, wie Stickstoff-, Phosphat-, Kali-, Kalk- und Magnesiumdünger, mineralische Mehrnährstoffdünger, wie NPK-Dünger, NP-Dünger, NK-Dünger und PA-Dünger, bei denen man früher auch von Mischdüngern sprach. Insbesondere kommen Stickstoff, Phosphate und Kali enthaltende Mehrstoffdünger in Frage, die als Volldünger bezeichnet werden. Zu den Stickstoffdüngern zählen z.B. Ammoniumsulfat, Kalkammonsalpeter, Harnstoff, Hamstoff-Aldehyd-Kondensate, Stickstoffmagnesia, Ammonsulfatsalpeter, Kalksalpeter und Calciumcyanamid. Als reine Phosphatdünger kommen erfindungsgemäß z.B. in Frage Superphosphat, Doppel- und Triplesuperphosphat, Thomasmehl und/oder Thomasphosphat, Dicalciumphosphat. Zu den besonders geeigneten Calciumphosphaten zählen Apatit und Phosphorit. Zu den vorteilhaften Kalidüngern zählen Kaliumchlorid und Kaliumsulfat sowie Magnesium enthaltende Kalisalze, wie Kalimagnesia. Einsetzbare Kalk- bzw. Magnesiumdünger sind z.B. Calciumcarbonat, Calciumoxid. Die obige Aufzählung ist nicht erschöpfend.

Die praktische Verwirklichung der vorliegenden Erfindung in Gestalt von Formkörpern spricht auch die Verwendung des erfindungsgemäß biologisch abbaubaren Kunststoffs weitergehend an. So ist es von besonderem Vorteil, wenn mit dem erfindungsgemäßen Kunststoff Fäden, insbesondere zur Weiterverarbeitung zu Filter Tow, herangezogen werden. Dabei beruht dieser Filter Tow vorzugsweise auf Celluloseacetat, Celluloseacetatbutyrat oder Celluloseacetatpropionat. Dabei werden diese Fäden, die zur Weiterverarbeitung zu Filter Tow vorgesehen sind, nach allgemein bekannten Trockenspinnverfahren hergestellt. Allerdings zeigt sich die Erfindung auch als besonders vorteilhaft, wenn mit dem erfindungsgemäßen biologisch abbaubaren Kunststoff Folien hergestellt werden. Dabei wird insbesondere eine Lösung nach dem Foliengießverfahren oder eine Schmelze des Kunststoffs nach dem Flachextrusions- oder dem Folienblasverfahren zu Folien weiterverarbeitet.

Die Erfindung lässt sich wie folgt technologisch erklären, ohne dass hierin eine Bindung gesehen werden soll: Überraschenderweise haben die Erfinder gefunden, dass dann ein stark beschleunigter Abbau des biologisch abbaubaren Kunststoffes stattfindet, wenn außer Zucker als wasserlösliche Komponente in geringem Umfang Salze mit Ammonium-, Phosphat- oder Sulfatgruppen in Celluloseacetatfäden eingesponnen werden, dies in Form feinst verteilter Partikel. Hieraus konnte mit weitergehenden Versuchen die Verallgemeinerung vollzogen werden. Es wurde festgestellt, dass dieser Effekt auch bei Einspinnen einer größeren Menge an salzhaltigen Cellulosediacetatfäden nachweisbar war. Hierzu führten die Erfinder weitergehende Tests durch, die in der folgenden Tabelle I erfasst sind. Die Werte der Tabelle I wurden anhand der DIN-Vorschrift EN ISO 11721-1 ermittelt. Diese stellt zunächst auf die Bestimmung der Widerstandsfähigkeit cellulosehaltiger Textilien gegen Mikroorganismen nach dem "Erdeingrabetest" ab. Die den biologischen Abbau begünstigende Wirkung gemäß der Erfindung geht vermutlich auf die Kombination von drei Effekten zurück: Erstens besteht sie darin, dass durch das Herauslösen der wasserlöslichen und extrem fein verteilten Substanzen ein Hohlraumnetzwerk entsteht, von dem aus die Mikroorganismen die umgebende Polymermatrix gleichzeitig von Außen und an vielen Stellen von Innen angreifen können. Zweitens scheint das Hohlraumnetzwerk aufgrund der Kapillarkräfte und der Hydrophilie der Polymeren sehr gut Feuchtigkeit zu speichern. Drittens werden z.B. Ammonium- und Phosphationen angeboten, die das mikrobiologische Wachstum fördern und somit durch den Zuwachs an Mikroorganismen den biologischen Abbau beschleunigen. Diese Vermutung wird durch die Literatur gestützt, wonach nicht nur Phosphat- und Ammonium-Ionen, sondern auch Sulfat-, Nitrat-, Calcium-, Magnesium-, Kalium- und Eisen-Ionen für das Wachstum von Mikroorganismen förderlich sind (sh. Ullmann's Biotechnology and Biochemical Engineering, Weinheim 2007, S. 29). Auch die Partikelgröße der Komponenten a) und b), die in dem biologisch abbaubaren Kunststoff fein verteilt sein müssen, nämlich im Micron-Bereich, ist hilfreich. So hilft die kleine Teilchengröße, die Festigkeitskennwerte des Polymerkörpers nicht wesentlich zu beeinträchtigen. Sind die Produkte aus dem erfindungsgemäßen biologisch abbaubaren Kunststoff sehr dünn, wie beispielsweise Fasern und Filme, so ist für eine optimale Qualität und Verarbeitbarkeit ein Partikeldurchmesser von etwa 2 µm besonders günstig.

Zwar ist es für den Fachmann nicht erforderlich, ihm genau anzugeben, wie er die geringe Teilchengröße der Komponenten a) und b) erhält. Dennoch sei hier darauf hingewiesen, dass vorteilhafterweise wie folgt vorgegangen wird: Die Mikronisierung der kleinen wasserlöslichen Materialien, wie der angesprochenen Salze, wird in nicht wässrigen Lösungsmitteln (wie beispielsweise Aceton, Ethylacetat, Ether, Isopropanol, Ethanol etc.) in einer Kugelmühle durchgeführt. Um ein Reagglomieren zu vermeiden, wird bereits beim Mahlen ein Teil des im Lösungsmittel löslichen Matrixpolymers zugegeben. Aus dieser Suspension lässt sich durch Mischen mit zusätzlichem Lösungsmittel und Polymermaterial die Ausgangssuspension für einen Trockenspinn- oder Foliengießprozess gewinnen. So wurden beispielsweise für das System Celluloseacetat, Aceton/Zucker, (NH₄)₂HPO₄, K₂SO₄ die Feststoffe als eine 10- bis 20-gewichtsprozentige Mischung in Aceton mit 4 bis 8 Gew.-% Cellulosediacetat vermischt, um dann in einem separaten Mischgefäß durch Hinzufügen von weiterem Aceton und Celluloseacetat ein Gewichtsverhältnis von etwa 70 : 28 : 1,5 von Aceton : Cellulosediacetat : mikronisierten Feststoffen als Ausgangssuspension für einen Trockenspinnprozess herzustellen. Die Weiterverarbeitung dieser Suspension in Filtern und feinen Spinndüsen gelang ohne jegliche Verstopfung. Die Fäden zeigten nur äußerst geringen Festigkeitsverlust. So wurden auch die in Tabelle I erfassten Muster nach dieser Vorgehensweise hergestellt.

Sollen die mikronisierten Stoffe a) und b) in einen biologisch abbaubaren Kunststoff eingebracht werden, der in geschmolzenem Zustand verarbeitet wird, so wird zunächst, wie oben beschrieben, ein Nassvermahlen in einem wasserfreien Lösungsmittel in einer Kugelmühle durchgeführt. Dann wird der Polymeranteil geringfügig erhöht und die Suspension beispielsweise auf einem Walzen- oder Sprühtrockner getrocknet. Ist der Kunststoff nicht in gängigen Lösungsmitteln, wie Aceton, Ethylacetat, Butylacetat etc., löslich, so kann das Mahlgut beispielsweise in Aceton gemahlen und mit 1 bis 5% Celluloseacetat stabilisiert werden. Das erhaltene Material kann dann als Masterbatch gemeinsam mit den Polymeren in der Mischzone eines Extruders homogen verteilt werden. Alternativ kann die fertig gemahlene Suspension in einem Kneter *in das* Matrixpolymer eingearbeitet, dann getrocknet und wie normales Granulat wieder in Schmelze ausgeformt werden.

Besonders günstig ist die Verwendung des erfindungsgemäßen biologisch abbaubaren Kunststoffs bei der Verwendung in Kompositmaterialien, z.B. für abbaubare Blumentöpfe, die gleich mit der Pflanze eingegraben werden. Als zweite Komponente in derartigen Kompositmaterialien dient oft getrocknetes Schilf oder dergleichen. So ist es von Vorteil, wenn die Abbaugeschwindigkeit der Blumentopfwände erhöht und die in dieser Anwendung optimale Abbaugeschwindigkeit mit der richtigen Dosierung von wasserlöslichem Material und Nährstoffangebot eingestellt wird. Gleichzeitig kann die Pflanze selbst vom Nährstoffangebot und gegebenenfalls vom Pflanzenschutzmittel profitieren, welche mit dem biologischen Abbau der Kunststoffkomponente nach und nach freigesetzt wird.

Die Erfindung wird nachfolgend anhand eines Beispiels weitergehend erläutert.

### Beispiel

Dieses Beispiel betrifft die Herstellung von Celluloseacetat-Fasern, die 5 Gew.-% Saccharose und 1 Gew.-% Natriumammoniumhydrogenphosphat enthalten, um hiermit die biologische Abbaubarkeit zu testen.

Suspension von Saccharose: 500 g Saccharose wurden in 2000 g Aceton zu d90 < 1,9 µm mikronisiert, wobei ein Bachofen Multilab KD 0,31 (Kugelmühle) mit Zirconiumoxid-Kugeln eines Durchmessers von 0,8 mm verwendet wurde. Die Suspension wurde gegen Sedimentation durch die Zugabe von 6 Gew.-% Celluloseacetat stabilisiert.

Suspension von Natriumammoniumhydroaenphosphat B: 100 g Natriumammoniumhydrogenphosphat wurden in 900 g Aceton bis auf den d90-Wert < 1 µm unter Verwendung einer Kugelmühle mikronisiert. Die Suspension wurde gegen Sedimentation durch Zugabe von 6 Gew.-% Celluloseacetat stabilisiert.

Herstellung einer Spinnlösung: Zur Herstellung der Spinnlösung wurde ein Mischbehälter mit Rührer verwendet. 1 Gewichtsteil einer Suspension von Saccharose und 0,4 Gewichtsteile der Suspension des Natriumammoniumhydrogenphosphats wurden zu einer Lösung von 21,93 Gewichtsteilen Celluloseacetat in 58,81 Gewichtsteilen Aceton gegeben, woraus eine Mischung mit einem Gesamtfeststoffgehalt von 26 Gew.-% resultierte. Der Feststoff-Gehalt ließ sich wie folgt aufgliedern: 94 Gew.-% Celluloseacetat, 5 Gew.-% Saccharose und 1 Gew.-% Natriumammoniumhydrogenphosphat. Der Wassergehalt der Spinnlösung wurde auf 2 bis 5 Gew.-% eingestellt und 12 Sunden lang gerührt.

Die Spinnlösung wurde filtriert (< 4 µm), wobei eine Tiefenfiltration durchgeführt wurde. Der Rückstand auf dem Filter war unbedeutend und betraf lediglich die Gesamtmenge von Additiven in der Spinnlösung.

Unter Verwendung dieser Spinnlösung wurde ein Trockenverspinnen durch Spinndüsen mit dreieckig geformten Düsen durchgeführt, um 210 3 dtex-Filamente mit trilobalem Querschnitt zu liefern. Nach dem Trocknen wurde aus diesen Filamenten eine rechteckige textile Fläche von 2 cm x 1 cm eines Flächengewichts von 0,15 g/cm² gehäkelt. Diese Probekörper wurden nach EN ISO 11721-1 in Erde vergraben. Nach bestimmten Zeiten wurden zur Gewichtsprüfung und zur Bestimmung der Acetylzahl Proben entnommen.

Das oben beschriebene Verfahren repräsentiert ein besonders vorteilhaftes Vorgehen. Es wurde dahingehend modifiziert, dass in dem letztlich erhaltenen biologisch abbaubaren Kunststoff neben 5 Gew.-% Saccharose 0,1 bzw. 0,5 Gew.-% Na(NH₄)₂PO₄ vorlagen, während in einem weiteren Versuch neben 5 Gew.-% Saccharose und 0,1 Gew.-% Na(NH₄)₂PO₄ noch 1 Gew.-% TiO₂(VLP7000) vorlag. Die Messergebnisse sind in der nachfolgenden Tabelle I erfasst

**Tabelle I**

| (Abbaugeschwindigkeiten von Celluloseacetat-Filter Tow im Erdeingrabungstest, ausgedrückt als prozentualer Gewichtsverlust) | | | |
|---|---|---|---|
| Material | mittlerer Gewichtsverlust (%) (nach 4 Wochen) | mittlerer Gewichtsverlust (%) (nach 8 Wochen) | mittlerer Gewichtsverlust (%) (nach 12 Wochen) |
| 5% Saccharose; 0,1% Na(NH₄)₂PO₄ | 10,64 | 33,39 | 50,63 |
| 5% Saccharose; 0,5% Na(NH₄)₂PO₄ | 19,49 | 44,37 | 72,9 |
| Keine Zusätze (Vergleich) | 4,54 | 16,81 | 25,29 |
| 5% Saccharose; 0,1% Na(NH₄)₂PO₄; 1% TiO₂(VLO7000) | 10,66 | 26,67 | 51,08 |
| Baumwolle | 68,58 | 90,31 | 87,32 |

### Anmerkung: Bestimmung der Abbaugeschwindigkeit nach EN ISO 11721-1

In der Tabelle I sind Mittelwerte des prozentualen Gewichtsverlustes nach 4 Wochen, 8 Wochen und 12 Wochen bezeichnet.

## Patentansprüche

1. Biologisch abbaubarer Kunststoff erhöhter biologischer Abbaugeschwindigkeit, **dadurch gekennzeichnet, dass** der Kunststoff
(a) 0.1 bis 40 Gew.-% feinst verteilte Partikel einer biologisch abbaubaren, wasserlöslichen, organischen Komponente einer mittleren Teilchengröße von weniger als 10 µm und
(b) feinst verteilte Partikel einer wasserlöslichen, das Wachstum von Mikroorganismen fördernden N, P und/oder S-enthaltenden anorganischen Komponente einer mittleren Teilchengröße von weniger als 10 µm enthält.

2. Kunststoff nach Anspruch 1, **dadurch gekennzeichnet, dass** der Kunststoff auf Celluloseester, insbesondere Celluloseacetat, Celluloseacetatpropionat und/oder Celluloseacetatbutyrat, Polylactid, Polycaprolacton und/oder Polyhydroxybuttersäure, beruht.

3. Kunststoff nach Anspruch 1 oder 2, **dadurch gekennzeichnet, dass** die Komponente a) auf einem wasserlöslichen Saccharid und/oder einer wasserlöslichen organischen Säure beruht.

4. Kunststoff nach Anspruch 3, **dadurch gekennzeichnet, dass** das wasserlösliche Saccharid Saccharose, Glukose, Maltose und/oder Laktose darstellt.

5. Kunststoff nach Anspruch 3, **dadurch gekennzeichnet, dass** die wasserlösliche organische Säure Oxalsäure, Malonsäure, Glutarsäure, Adipinsäure, Hydrooxycarbonsäuren, insbesondere Milchsäure, Apfelsäure, Weinsäure, Zitronensäure und/oder Ascorbinsäure und/oder Aminocarbonsäuren, darstellt.

6. Kunststoff nach Anspruch 1 oder 2, **dadurch gekennzeichnet, dass** die Komponente a) eine wasserlösliche organische Stickstoffverbindung und/oder eine wasserlösliche organische Phosphorverbindung darstellt.

7. Kunststoff nach Anspruch 6, **dadurch gekennzeichnet, dass** die wasserlösliche organische Stickstoffverbindung Harnstoff, Guardinin, Hexamethylentetraamin, Glycin und/oder Alanin ist.

8. Kunststoff nach mindestens einem der Ansprüche 1 bis 7, **dadurch gekennzeichnet, dass** die Komponente a) eine mittlere Teilchengröße von weniger als etwa 5 µm aufweist.

9. Kunststoff nach mindestens einem der vorhergehenden Ansprüche, **dadurch gekennzeichnet, dass** die Komponente a) in dem Kunststoff in einer Menge von etwa 1 bis 20 Gew.-% enthalten ist.

10. Kunststoff nach mindestens einem der vorhergehenden Ansprüche, **dadurch gekennzeichnet, dass** die Komponente b) in Form von Cl-, K-, Mg-, Ca- und/oder Fe-haltigen Salzen vorliegt.

11. Kunststoff nach Anspruch 1 oder 10, **dadurch gekennzeichnet, dass** die Komponente b) in Form von Salzen von Na(NH₄)₂PO₄, Na(NH₄)HPO₄, NaH₂PO₄, Na₂SO₄, (NH₄)₂SO₄, NH₄NO₃, NaNO₃, MgSO₄, KH₂PO₄, FeSO₄ und/oder NH₄Cl einzeln oder in Mischung vorliegen.

12. Kunststoff nach mindestens einem der vorhergehenden Ansprüche, **dadurch gekennzeichnet, dass** die Komponente b) eine mittlere Teilchengröße von weniger als 5 µm aufweist.

13. Kunststoff nach mindestens einem der vorhergehenden Ansprüche, **dadurch gekennzeichnet, dass** die Komponente b) in dem Kunststoff in einer Menge von etwa 0.01 bis 20 Gew.-% vorliegt.

14. Kunststoff nach mindestens einem der vorhergehenden Ansprüche als Formkörper, insbesondere in Form von Fasern, Folien, insbesondere tiefgezogenen Folien, insbesondere zur Anwendung als Verpackungsmaterialien, von Spritzgussartikeln, dickwandigen Formkörpern, Granulaten, Mikrobeats, Perlen sowie Gefäßen, insbesondere Blumentöpfen.

15. Kunststoff nach Anspruch 14, **dadurch gekennzeichnet, dass** der Formkörper geregelt freisetzbare Biocide und/oder Düngemittel enthält.

16. Verwendung des Kunststoffs nach mindestens einem der Ansprüche 1 bis 15 zur Herstellung von Fäden, insbesondere zur Weiterverarbeitung zu Filter Tow.

17. Verwendung nach Anspruch 16, **dadurch gekennzeichnet, dass** zur Ausbildung von Fäden zur Weiterverarbeitung zu Filter Tow das Trockenspinnverfahren angewandt wird.

18. Verwendung des Kunststoffs nach mindestens einem der Ansprüche 1 bis 17 zur Herstellung von Folien, wobei eine Lösung oder Schmelze des Kunststoffs zur Herstellung der Folien nach dem Flachextrusionsverfahren oder nach dem Folienblasverfahren verarbeitet wird.

## Claims

1. A biodegradable plastic with an increased biodegradation speed, wherein the plastic contains
(a) 0.1 to 40 % by weight of finely distributed particles of a biodegradable, water-soluble, organic component with a mean particle size of less than 10 µm and
(b) finely distributed particles of a water-soluble, inorganic component containing N, P and/or S, promoting the growth of microorganisms and with a mean particle size of less than 10 µm.

2. The plastic according to claim 1, wherein the plastic is based on cellulose esters, in particular cellulose acetate, cellulose acetate propionate and/or cellulose acetate butyrate, polylactide, polycaprolactone and/or polyhydroxybutyric acid.

3. The plastic according to claim 1 or 2, wherein the component (a) is based on a water-soluble saccharide and/or a water-soluble organic acid.

4. The plastic according to claim 3, wherein the water-soluble saccharide is saccharose, glucose, maltose and/or lactose.

5. The plastic according to claim 3, wherein the water-soluble organic acid is oxalic acid, malonic acid, glutaric acid, adipic acid, hydroxy carboxylic acids, in particular lactic acid, malic acid, tartaric acid, citric acid, and/or ascorbic acid and/or amino carboxylic acids.

6. The plastic according to claims 1 or 2, wherein the component (a) represents a water-soluble organic nitrogen compound and/or a water-soluble organic phosphorus compound.

7. The plastic according to claim 6, wherein the water-soluble organic nitrogen compound is urea, guanidine, hexamethylenetetramine, glycine and/or alanine.

8. The plastic according to one of claims 1 to 7, wherein the component (a) has a mean particle size of less than approximately 5 µm.

9. The plastic according to at least one of the preceding claims, wherein the component (a) is contained in the plastic in a quantity of approximately 1 to 20 % by weight.

10. The plastic according to at least one of the preceding claims, wherein the component (b) is in the form of Cl-, K-, Mg-, Ca- and/or Fe- containing salts.

11. The plastic according to claim 1 or 10, wherein the component b) is in the form of salts of Na(NH₄)₂PO₄, Na(NH₄)HPO₄, NaH₂PO₄, Na₂SO₄, (NH₄)₂SO₄, NH₄NO₃, NaNO₃, MgSO₄, KH₂PO₄, FeSO₄ and/or NH₄Cl singly or in a mixture.

12. The plastic according to at least one of the preceding claims, wherein the component (b) has a mean particle size of less than 5 µm.

13. The plastic according to at least one of the preceding claims, wherein the component b) is present in the plastic in a quantity of approximately 0.01 to 20 % by weight.

14. The plastic according to at least one of the preceding claims as moulded parts, in particular in the form of fibres, films, in particular deep-drawn films, in particular for use as packaging materials, injection-moulded articles, thick-walled moulded parts, granulates, microbeads, beads and vessels.

15. The plastic according to claim 14, wherein the moulded part contains controlled-releasable biocides and/or fertilizers.

16. The use of the plastic according to at least one of claims 1 to 15 in the manufacture of threads, in particular for further processing into filter tow.

17. The use according to claim 16, wherein the dry spinning method is employed to form threads for further processing into filter tow.

18. The use of the plastic according to at least one of claims 1 to 17 in the manufacture of films, wherein a solution or melt of the plastic is processed into films by the flat extrusion method or by the film blowing method.

## Revendications

1. Matériau synthétique biodégradable présentant une vitesse de dégradation biologique augmentée, **caractérisé en ce que** le matériau synthétique contient
a) 0,1 à 40 % en poids de particules très finement divisées d'un composant organique soluble dans l'eau, biodégradable, présentant une grosseur moyenne de particule inférieure à 10 µm et
b) des particules très finement divisées d'un composant inorganique soluble dans l'eau, favorisant la croissance de micro-organismes, contenant N, P et/ou S, présentant une grosseur moyenne de particule inférieure à 10 µm.

2. Matériau synthétique selon la revendication 1, **caractérisé en ce que** le matériau synthétique est à base d'ester de cellulose, en particulier d'acétate de cellulose, d'acétate-propionate de cellulose et/ou d'acétate-butyrate de cellulose, de polylactide, de polycaprolactame et/ou de poly(acide hydroxybutyrique).

3. Matériau synthétique selon la revendication 1 ou 2, **caractérisé en ce que** le composant a) est à base d'un saccharide soluble dans l'eau et/ou d'un acide organique soluble dans l'eau.

4. Matériau synthétique selon la revendication 3, **caractérisé en ce que** le saccharide soluble dans l'eau est le saccharose, le glucose, le maltose et/ou le lactose.

5. Matériau synthétique selon la revendication 3, **caractérisé en ce que** l'acide organique soluble dans l'eau est l'acide oxalique, l'acide malonique, l'acide glutarique, l'acide adipique, les acides hydroxycarboxyliques, en particulier l'acide lactique, l'acide malique, l'acide tartrique, l'acide citrique et/ou l'acide ascorbique et/ou les acides aminocarboxyliques.

6. Matériau synthétique selon la revendication 1 ou 2, **caractérisé en ce que** le composant a) est un composé azoté organique soluble dans l'eau et/ou un composé phosphoré organique soluble dans l'eau.

7. Matériau synthétique selon la revendication 6, **caractérisé en ce que** le composé azoté organique soluble dans l'eau est l'urée, la guardinine, l'hexaméthylènetétraamine, la glycine et/ou l'alanine.

8. Matériau synthétique selon au moins l'une quelconque des revendications 1 à 7, **caractérisé en ce que** le composant a) présente une grosseur moyenne de particule inférieure à environ 5 µm.

9. Matériau synthétique selon au moins l'une quelconque des revendications précédentes, **caractérisé en ce que** le composant a) est contenu dans le matériau synthétique en une quantité d'environ 1 à 20 % en poids.

10. Matériau synthétique selon au moins l'une quelconque des revendications précédentes, **caractérisé en ce que** le composant b) se trouve sous forme de sels contenant du Cl, du K, du Mg, du Ca et/ou du Fe.

11. Matériau synthétique selon la revendication 1 ou 10, **caractérisé en ce que** le composant b) est sous forme de sels de Na(NH₄)₂PO₄, Na(NH₄)HPO₄, NaH₂PO₄, Na₂SO₄, (NH₄)₂SO₄, NH₄NO₃, NaNO₃, MgSO₄, KH₂PO₄, FeSO₄ et/ou NH₄Cl, seuls ou en mélange.

12. Matériau synthétique selon au moins l'une quelconque des revendications précédentes, **caractérisé en ce que** le composant b) présente une grosseur moyenne de particule inférieure à 5 µm.

13. Matériau synthétique selon au moins l'une quelconque des revendications précédentes, **caractérisé en ce que** le composant b) se trouve dans le matériau synthétique en une quantité d'environ 0,01 à 20 % en poids.

14. Matériau synthétique selon au moins l'une quelconque des revendications précédentes en tant que corps façonnés, en particulier sous forme de fibres, de feuilles, en particulier de feuilles embouties, en particulier pour l'utilisation comme matériaux d'emballage, sous forme d'objets moulés par injection, de corps façonnés à parois épaisses, de granulats, de microbilles, de perles ainsi que de récipients.

15. Matériau synthétique selon la revendication 14, **caractérisé en ce que** le corps façonné contient des biocides et/ou des engrais pouvant être libérés de manière régulée.

16. Utilisation du matériau synthétique selon au moins l'une quelconque des revendications 1 à 15 pour la fabrication de fils, en particulier pour la transformation ultérieure en mèche filtrante.

17. Utilisation selon la revendication 16, **caractérisée en ce que** le procédé de filage à sec est utilisé pour la formation de fils destinés à la transformation ultérieure en mèche filtrante.

18. Utilisation du matériau synthétique selon au moins l'une quelconque des revendications 1 à 17 pour la fabrication de feuilles, une solution ou une masse fondue du matériau synthétique étant transformée selon le procédé d'extrusion à plat ou le procédé de soufflage de feuilles pour la fabrication de feuilles.
